# EUROPÄISCHE PATENTSCHRIFT

(11) **EP 2 119 610 B1**
(45) Veröffentlichungstag und Bekanntmachung des Hinweises auf die Patenterteilung: **03.12.2014**
(21) Anmeldenummer: 09006164.9
(22) Anmeldetag: 06.05.2009
(51) Int. Cl.: B60T 13/66, B60T 17/22

(54) **Vorrichtung und Verfahren zum Betreiben und Überwachen eines Magnetventils einer elektrischen Feststellbremse**
Method and device for operating and monitoring a magnetic valve of an electric hand brake
Dispositif et procédé de fonctionnement et de surveillance d'une soupape magnétique d'un frein de stationnement électrique

(30) Priorität: 09.05.2008 DE 102008022953
(43) Veröffentlichungstag der Anmeldung: 18.11.2009
(73) Patentinhaber: KNORR-BREMSE Systeme für Nutzfahrzeuge GmbH, 80809 München (DE)
(72) Erfinder: Hilberer, Eduard, 68766 Hockenheim (DE); Deeg, Markus, 71735 Eberdingen (DE); Herges, Michael, 80935 München (DE); Battistella, Denis, 20037 Paderno Dugnano (IT); Krockenberger, Klaus, 90547 Stein (DE)
(74) Vertreter: Schönmann, Kurt

(56) Entgegenhaltungen:
- WO-A-02/42136
- DE-A1- 3 633 113
- DE-A1- 10 149 604
- DE-A1- 19 806 821
- DE-A1-102005 024 343

## Beschreibung

Die Erfindung betrifft eine Vorrichtung, die ein Magnetventil einer elektrischen Feststellbremse eines Nutzfahrzeugs mit mindestens einer Spule und mindestens einem Permanentmagneten betreibt und überwacht, wobei die Vorrichtung ein Steuergerät und elektronische Bauteile umfasst.

Die Erfindung betrifft weiterhin ein Verfahren zum Betreiben und Überwachen eines Magnetventils einer elektrischen Feststellbremse eines Nutzfahrzeugs mit mindestens einer Spule und mindestens einem Permanentmagneten, wobei die Vorrichtung ein Steuergerät und elektronische Bauteile umfasst.

Magnetventile werden durch das Anlegen einer elektrischen Spannung geschaltet. Dabei wird üblicherweise von einer Spule ein magnetisches Feld erzeugt, welches wiederum die notwendige Kraft zum Öffnen beziehungsweise Schließen des Magnetventils aufbringt. Sowohl die Spule selbst als auch ein der Spule zugehöriger Magnet kann durch die Schaltvorgänge des Magnetventils auf Dauer beschädigt werden. Es ist auch denkbar, dass das Magnetventil durch die andauernden Erschütterungen defekt geht, denen es bei dem Einsatz in einem Fahrzeug ständig ausgesetzt ist. In diesem Fall ist das Schalten des Magnetventils nicht mehr möglich, obwohl rein äußerlich kein Defekt feststellbar ist. Dies kann zu gefährlichen Situationen führen, wenn das Magnetventil sicherheitsrelevante Funktionen übernimmt, beispielsweise als Schaltventil im Rahmen einer Feststellbremsanlage eines Nutzfahrzeugs. Insbesondere bei elektropneumatischen Feststellbremsen ist dies wichtig, das sind Feststellbremssysteme bei denen die zu überwachende Magnetventilspule ein Pneumatikventil ansteuert, welches wiederum den Feststellbremszylinder be- und entlüftet. Infolge der verlängerten Wirkkette und der Verwendung verschiedener Medien ist eine Überwachung aller beteiligten Bauelemente welche den Öffnungs- und Schließvorgang des Federspeicherzylinders steuern erforderlich, um eine eindeutige Fehlerzuordnung für die Servicewerkstätten machen zu können. Durch eine erforderliche zusätzliche Steuerung der Feststellbremse des Anhängers, der bei Nutzfahrzeugen sehr häufig vorhanden ist, haben elektropneumatische Feststellbremssysteme für Nutzfahrzeuge einen erhöhten Bauaufwand, dessen Bauteile überwacht werden müssen. Im Fehlerfall wird vom Steuergerät, welches das zu überwachende Magnetventil ansteuert, unter zusätzlichem Einbezug der Fahrzeugdaten dem Fahrer die so ermittelte Fehlerquelle angezeigt, damit er sein Fahrverhalten entsprechend anpassen kann.

Die DE 10 2005 024 343 A1 beschreibt eine gattungsgemäße Vorrichtung und ein gattungsgemäßes Verfahren.

DE 101 49 604 A1 beschreibt eine temperaturabhängige Überwachung einer Spulenspannung oder eines Spulenstroms zur Überwachung eines Bremszustandes bei elektromagnetisch betätigten Bremsen.

Aufgabe der Erfindung ist die Bereitstellung einer Vorrichtung mit deren Hilfe sowohl das Betreiben als auch das Überwachen der Funktionsfähigkeit eines Magnetventils einer elektrischen Feststellbremse eines Nutzfahrzeugs zuverlässiger durchführbar ist.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Vorrichtung dadurch auf, dass das Steuergerät geeignet ist, einen Strom- oder Spannungsverlauf an der mindestens einen Spule direkt oder indirekt zu erfassen, dass ein Temperatursensor vorgesehen ist, der die Temperatur des Magnetventils erfasst und dass der Temperatursensor über eine Leitung mit dem Steuergerät verbunden ist. Durch das Erfassen eines Strom- beziehungsweise Spannungsverlaufs an einer Spule kann eine Beschädigung der Spule beziehungsweise des zugehörigen Permanentmagneten detektiert werden, da beispielsweise ein Kurzschluss in der Spule beziehungsweise ein Bruch des Permanentmagneten eine Veränderung des detektierten Strombeziehungsweise Spannungsverlaufs an der Spule während eines Schaltvorgangs verursacht. Veränderung ist hierbei in dem Sinne zu verstehen, dass der erfasste Strom- beziehungsweise Spannungsverlauf von einem erwarteten Strom- oder Spannungsverlauf abweicht, der auftreten würde, wenn die Spule und der Magnet nicht beschädigt wären. Durch das Erfassen des Strom- beziehungsweise Spannungsverlaufs wird also das Schalten oder das Nichtschalten des Magnetventils detektierbar. Auch die Veränderung der Temperatur des Magnetventils und damit der Spule und des zugehörigen Permanentmagneten hat eine starke Auswirkung auf den erfassbaren Strom- beziehungsweise Spannungsverlauf. Über die Leitung können die erfassten Messwerte in einfacher Weise zur Auswertung an das Steuergerät übertragen werden.

Vorzugsweise ist dabei vorgesehen, dass die elektrische Feststellbremse eine elektropneumatische Feststellbremse ist. Gerade eine elektropneumatische Feststellbremse verfügt über mehrere Magnetventile zur Steuerung der Feststellbremsanlage, deren Überwachung zur Fehleranalyse vorteilhaft ist.

Nützlicherweise kann dabei vorgesehen sein, dass das Steuergerät geeignet ist, eine Versorgungsspannung des Magnetventils über mindestens einen Strom- oder Spannungssensor zu erfassen. Die Veränderung der Versorgungsspannung des Magnetventils hat eine große Auswirkung auf die erfasste Strom- beziehungsweise Spannungskurve, die an der Spule erfassbar ist.

Dabei kann insbesondere vorgesehen sein, dass der mindestens eine Strom- oder Spannungssensor über eine Leitung mit dem Steuergerät verbunden ist. Über die Leitung können die erfassten Messwerte in einfacher Weise zur Auswertung an das Steuergerät übertragen werden.

Nützlicherweise kann auch vorgesehen sein, dass das Steuergerät zumindest teilweise in ein anderes Steuergerät integriert ist. Durch die Integration in ein anderes Steuergerät, beispielsweise ein ABS- oder EAC-Steuergerät, können elektronische Bauteile und Bauraum eingespart werden.

Es kann auch vorgesehen sein, dass das Steuergerät einen Anschluss an den CAN-Bus aufweist. Über den CAN-Bus ist ein Datenaustausch zwischen dem Steuergerät und sonstigen Fahrzeugkomponenten möglich.

Weiterhin kann vorgesehen sein, dass das Steuergerät ein Zeitschaltglied umfasst. Ein Zeitschaltglied ermöglicht dem Steuergerät eine zyklische Überprüfung der Funktionsfähigkeit des Magnetventils.

Alternativ kann vorgesehen sein, dass das Steuergerät geeignet ist, ein Zeitsignal über den CAN-Bus zu empfangen. Auch auf diese Weise kann das Steuergerät zyklisch die Funktionsfähigkeit des Magnetventils überprüfen.

Insbesondere kann vorgesehen sein, dass die elektronischen Bauteile und die Spule eine Brückenschaltung bilden. Eine Brückenschaltung ermöglicht eine sichere und stabile Ansteuerung der Spule, die dabei als Verbindung zwischen zwei Halbbrücken geschaltet wird.

Nützlicherweise kann weiterhin vorgesehen sein, dass ein Drucksensor vorgesehen ist, der den Druck stromabwärts des Magnetventils erfasst. Durch den Drucksensor sind weitere Defekte des Magnetventils erfassbar, beispielsweise ein Leitungsdefekt oder ein Klemmen des Magnetventils, die auftreten können, obwohl die Spule und der zugehörige Permanentmagnet funktionsfähig sind.

Weiterhin kann vorgesehen sein, dass das Steuergerät einen Schreib-Lesespeicher umfasst. In dem Schreib-Lesespeicher kann beispielsweise ein Defekt des Magnetventils zu Diagnosezwecken gespeichert werden. Es ist auch denkbar, in dem Schreib-Lesespeicher einen exemplarischen Strom- beziehungsweise Spannungsverlauf für einen Schaltvorgang des Magnetventils abzuspeichern, anhand dessen ein Defekt feststellbar ist.

Das gattungsgemäße Verfahren wird dadurch weiterentwickelt, dass ein Strom- oder Spannungsverlauf an der mindestens einen Spule direkt oder indirekt erfasst wird, dass eine Temperatur des Magnetventils erfasst und an das Steuergerät übermittelt wird und dass aus dem Strom- oder Spannungsverlauf in Abhängigkeit von der erfassten Temperatur das Schalten oder Nichtschalten des Magnetventils detektiert wird.

Auf diese Weise werden die Vorteile und Besonderheiten der erfindungsgemäßen Vorrichtung auch im Rahmen eines Verfahrens umgesetzt. Dies gilt auch für die nachfolgend angegebenen besonders bevorzugten Ausführungsformen des erfindungsgemäßen Verfahrens.

Dieses ist vorteilhafterweise dadurch weitergebildet, dass eine Versorgungsspannung des Magnetventils erfasst wird.

Insbesondere kann vorgesehen sein, dass zyklische Testimpulse zum Schalten des Magnetventils gesendet werden, die so kurz sind, dass die Trägheit des Magnetventils nicht überwunden werden kann. Auf diese Weise ist eine Testfunktion realisierbar, die durchgeführt werden kann, ohne den Schaltzustand des Magnetventils zu verändern.

Weiterhin kann vorgesehen sein, dass zyklische Testimpulse zum Schalten des Magnetventils gesendet werden, die einen Strom bewirken, der geringer als ein Umschaltstrom des Magnetventils ist. Auch auf diese Art ist eine Testfunktion realisierbar, die ohne Veränderung des Schaltzustands des Magnetventils durchgeführt werden kann.

Es kann auch vorgesehen sein, dass ein Druck stromabwärts des Magnetventils erfasst wird und dass der ermittelte Druck im Rahmen eines Plausibilitätstests für die Funktionsfähigkeit des Magnetventils herangezogen wird.

Nützlicherweise kann auch vorgesehen sein, dass ein Warnsignal ausgegeben, gespeichert und ein Notlaufbetrieb eingeleitet wird, wenn der Plausibilitätstest nicht erfolgreich ist. Wenn der Plausibilitätstest nicht erfolgreich ist, ist von einem Defekt des Magnetventils auszugehen, weshalb entsprechende Maßnahmen, beispielsweise in Form eines Notlaufbetriebs und der Ausgabe eines Warnsignals für die Betriebssicherheit vorteilhaft sind.

Ferner kann vorgesehen sein, dass eine Referenzkurve für den Strom- oder den Spannungsverlauf ermittelt wird und in einem Schreib-Lesespeicher gespeichert wird. Bei einem neuen Magnetventil kann zunächst davon ausgegangen werden, dass die Spule und der zugehörige Permanentmagnet funktionsfähig sind. Fertigungstoleranzen verursachen jedoch auch bei zwei baugleichen neuen Magnetventilen unterschiedliche Referenzkurven, weshalb die Ermittelung einer dem jeweiligen Magnetventil zugehörigen Referenzkurve sinnvoll sein kann.

In diesem Zusammenhang kann vorgesehen sein, dass der ermittelte Strom- oder Spannungsverlauf mit einer in dem Schreib-Lesespeicher gespeicherten Referenzkurve verglichen wird.

Vorteilhafterweise kann vorgesehen sein, dass bei dem Vergleich der gespeicherten Referenzkurve und dem gemessenen Strom- oder Spannungsverlauf ein Toleranzfeld und ein Winkel berücksichtigt werden. Aufgrund von Schwankungen der Versorgungsspannung und der Temperatur des Magnetventils sind auch ohne einen Defekt Abweichungen zwischen dem gemessenen Strom- oder Spannungsverlauf und der gespeicherten Referenzkurve möglich.

Diese Abweichungen können durch die Berücksichtigung eines Toleranzfeldes und eines Winkels berücksichtigt werden. Der gemessene Strom- oder Spannungsverlauf sollte dann innerhalb des Toleranzfeldes liegen und einen bestimmten Winkel mit der Zeitachse aufweisen.

Vorteilhafterweise kann dann vorgesehen sein, dass eine Fehlermeldung ausgegeben, gespeichert und ein Notlaufbetrieb eingeleitet wird, wenn der gemessene Strom- oder Spannungsverlauf außerhalb des der Referenzkurve zugehörigen Toleranzfeldes liegt.

Alternativ kann auch vorgesehen sein, dass eine Fehlermeldung ausgegeben, gespeichert und ein Notlaufbetrieb eingeleitet wird, wenn der gemessene Strom- oder Spannungsverlauf beim Schalten der Spule von der gespeicherten Referenzkurve abdriftet. Dies ist die einfachere Möglichkeit, da kein Toleranzfeld benötigt wird. Abdriften von der Referenzkurve bedeutet dabei, dass die Differenz aus dem gemessenen Strom- beziehungsweise Spannungsverlauf und der gespeicherten Referenzkurve während des Schaltvorganges anwächst. Das Anwachsen kann insbesondere spontan durch einen während des Schaltvorganges auftretenden Defekt verursacht werden.

Die Erfindung wird nun mit Bezug auf die begleitenden Zeichnungen anhand besonders bevorzugter Ausführungsformen beispielhaft erläutert.

Es zeigen:
- Figur 1: eine erfindungsgemäße Vorrichtung zum Betreiben und Überwachen eines Magnetventils;
- Figur 2: eine mögliche Anordnung eines Drucksensors stromabwärts des Magnetventils und
- Figur 3: eine Referenzkurve mit einem Toleranzfeld und einem Winkel,
- Figur 4: eine einfache Schaltanordnung zur Erfassung einer zeitlichen Stromänderung an Spulen eines Magnetventils,
- Figur 5: eine weitere einfache Schaltanordnung zur Erfassung einer zeitlichen Stromänderung an Spulen eines Magentventils und
- Figur 6: einen exemplarischen zeitlichen Stromverlauf während eines Schaltvorganges einer Spule eines Magnetventils.

In den nachfolgenden Zeichnungen bezeichnen gleiche Bezugszeichen gleiche oder gleichartige Teile.

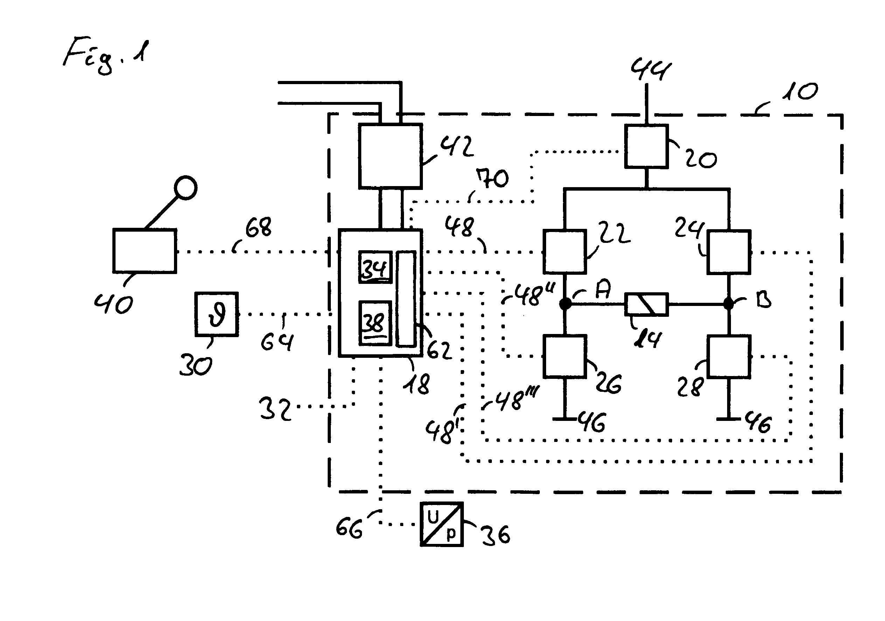

Figur 1 zeigt eine erfindungsgemäße Vorrichtung zum Betreiben und Überwachen eines Magnetventils. Die erfindungsgemäße Vorrichtung 10 umfasst ein Steuergerät 18 mit einem Zeitschaltglied 34, einem Prozessor 62 und einem Schreib-Lesespeicher 38, einen über eine Leitung 70 mit dem Steuergerät 18 verbundenen Strom- beziehungsweise Spannungssensor 20, elektronische Bauteile 22, 24, 26 und 28, die zusammen mit einer Spule 14 eine Brückenschaltung bilden. Weitere analog beschaltete Spulen können vorgesehen sein, wenn das Magnetventil für seinen Betrieb weitere Spulen benötigt, die ebenfalls überwacht werden sollen. Weiterhin ist ein Netzteil 42 vorgesehen, das das Steuergerät 18 mit Spannung versorgt. An das Steuergerät 18 sind darüber hinaus über Leitungen 68, 64, 66 ein Handsteuergerät 40, ein Temperatursensor 30 und ein Drucksensor 36 angeschlossen. Über einen Anschluss 32 ist ferner die Kommunikation mit weiteren nicht dargestellten Fahrzeugkomponenten möglich. Sämtliche Komponenten der dargestellten Schaltung, bis auf das Handsteuergerät 40, können auf einer einzelnen Platine in einem gemeinsamen Gehäuse untergebracht werden. Die elektronischen Bauteile 22, 24, 26 und 28 können beispielsweise Transistoren sein, die über Signalleitungen 48, 48', 48" und 48''' von dem Steuergerät 18 angesteuert werden. Eine Spannungsversorgung 44 versorgt Eingangsseiten der Brückenschaltung während Ausgangsseiten der Brückenschaltung mit einer Erde 46 gekoppelt sind, wobei die Spannungsversorgung während der verschiedenen Betriebszustände des Fahrzeugs zwischen 16 und 36 Volt schwankt. Das Steuergerät 18 kann die elektronischen Bauteile 22, 24, 26 und 28 so ansteuern, das zwischen Schaltknoten A und B ein messbarer Strom fließt beziehungsweise eine messbare Spannung anliegt. Der zeitliche Verlauf dieser Strom- beziehungsweise Spannungskurve kann zur Detektion eines Spulen- beziehungsweise Magnetdefekts herangezogen werden. Zu diesem Zweck wird die ermittelte Strom- beziehungsweise Spannungskurve mit einer in dem Schreib-Lesespeicher 38 gespeicherten Referenzkurve 100 verglichen. Die Messung kann in Abhängigkeit von dem Zeitschaltglied 34 und/oder dem Handsteuergerät 40 erfolgen, wobei der Strom- beziehungsweise Spannungsverlauf in dem Schaltkreis je nach Anordnung des Sensors high Side oder low Side (Massenseitig) an der Spule oder dem elektronischen Bauteil 24, das als Treiber wirkt, gemessen wird. Dabei werden die Versorgungsspannung und die Temperatur berücksichtigt. Die Leitungen 64, 66, 68, 70 können entweder zur analogen oder digitalen Signalübertragung ausgelegt sein, wobei im Falle einer digitalen Übertragung eventuell AD-/DA-Wandler vorzusehen sind, und die Daten als unterschiedliche Bitfolgen kodiert werden.

Weicht die gemessene Kurve stark von der gespeicherten Kurve ab, was später noch ausführlicher erklärt wird, so gibt das Steuergerät 18 über den Anschluss 32 eine Fehlerbotschaft an weitere nicht dargestellte Steuergeräte aus, um so einen Notlaufbetrieb zu starten und ein Warnsignal auszugeben. Die gesamte Vorrichtung kann beispielsweise in ein Fahrzeug integriert sein, wobei das Magnetventil die Steuerfunktion einer elektrischen Feststellbremsanlage wahrnimmt. Wird die Spule aktiv geschaltet, so ist die Reaktion auf das elektrische Schaltsignal über den Drucksensor 36 erfassbar, welcher dem Magnetventil nachgeschaltet ist, der die Spule 14 zugeordnet ist. Anhand der gemessenen Druckschwankungen kann überwacht werden, ob das bistabile Magnetventil, dem die Spule 14 zugeordnet ist, nicht oder fehlerhaft schaltet. Es ist auch möglich, dass das Steuergerät 18 Testimpulse an die Spule 14 sendet, die zeitlich so kurz sind, dass keine Reaktion eines der Spule zugeordneten Magneten erfolgt, oder einen Strom bewirken, der geringer als der Umschaltstrom des Magnetventils ist, weshalb dann nur der Strom- beziehungsweise Spannungsverlauf über Shunts oder die vorhandenen Innenwiderstände überprüft wird. Diese Testimpulse erlauben die Überprüfung der Spule 14 und des Permanentmagneten ohne das zugehörige Magnetventil zu schalten. Das Warnsignal und der Notlaufbetrieb können durch senden einer Fehlerbotschaft über den Anschluss 32 an ein nicht dargestelltes Steuergerät einer Betriebsbremse und ein ebenfalls nicht dargestelltes Steuergerät des Armaturenbretts veranlasst werden. Die elektronischen Bauelemente 22, 24, 26, 28 und die Spule 14 bilden zusammen eine Differenzverstärkerschaltung. Der Stromsensor 20 kann dabei im Versorgungszweig der elektronischen Bauteile 22, 24 high Side angeordnet, in der Spule selbst als ohmsche Windung beziehungsweise in Serie zur Spule realisiert oder den elektronischen Bauteilen 26, 28 low Side nachgeordnet sein. In allen Fällen ist der Stromsensor 20 über eine Leitung 70 mit dem Prozessor 62 des Steuergeräts 18 direkt oder indirekt verbunden. Bei einer indirekten Verbindung zwischen dem Stromsensor 20 und dem Prozessor 62 kann ein Verstärker oder ein Wandler mit digitalen integrierten Bauelementen vorgesehen sein. Das Handsteuergerät 40 ist über die Leitung 68 direkt oder indirekt mit dem Prozessor 62 verbunden, wobei bei einer indirekten Verbindung zwischen dem Handsteuergerät 40 und dem Prozessor 62 ein weiteres Steuergerät zwischengeschaltet sein kann, welches zum Beispiel eine Signalwandlung vornehmen kann. Über die Leitung 68 werden die Betätigungswünsche des Fahrers an das Steuergerät 18 übertragen. Es ist auch denkbar, den Prozessor 62 in ein anderes nicht dargestelltes Steuergerät zu integrieren, welches eine ABS-, EBS- oder EAC-Funktionalität bereitstellt. Sind weitere Spulen und Permanentmagnete für den Betrieb des Magnetventils notwendig, so können diese in analoger Weise integriert und überwacht werden.

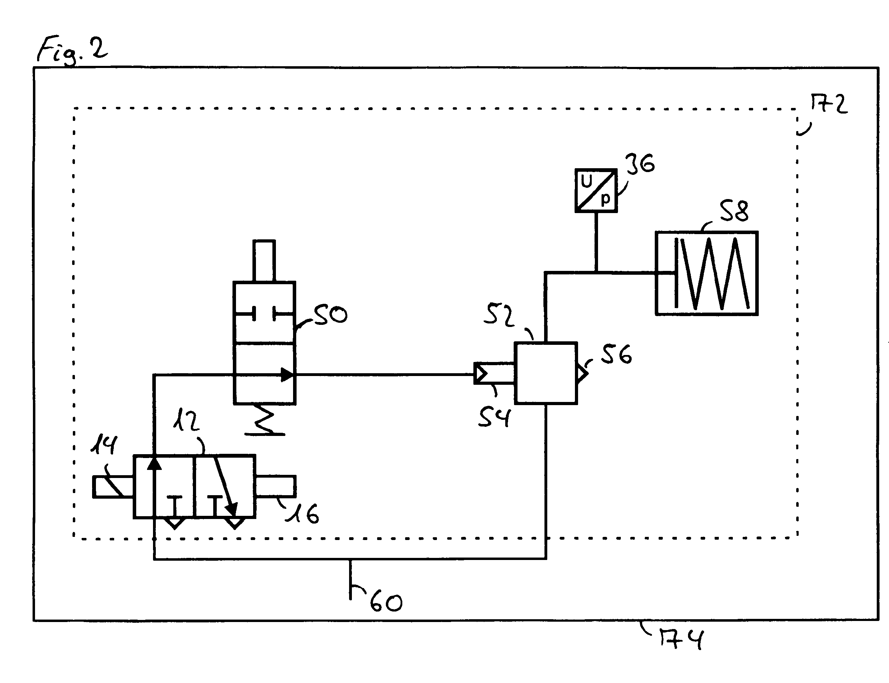

Figur 2 zeigt eine mögliche Anordnung eines Drucksensors stromabwärts des Magnetventils. Die Anordnung ist Bestandteil einer in ein Nutzfahrzeug 74 integrierten Feststellbremsanlage 72. Das dargestellte Magnetventil 12 ist ein 3/2-Wegeventil, das eine Spule 14 und einen Permanentmagneten 16 umfasst. Der Permanentmagnet 16 kann beispielsweise als Torus ausgebildet sein, wobei die magnetischen Feldlinien innerhalb des Torus verlaufen. Bricht der Permanentmagnet 16, so ändert sich der Feldlinienverlauf stark, da die Feldlinien nicht mehr vollständig innerhalb des Torus gebunden sind. Diese Änderung ist durch die Strombeziehungsweise Spannungsmessung erfassbar. Stromabwärts des Magnetventils 12 ist ein 2/2-Wegenventil 50 als ein Holdventil vor einem Steuereingang 54 eines Relaisventils 52 mit einer Entlüftungseinrichtung 56 dargestellt. Das Magnetventil 12 und das Relaisventil 52 werden aus derselben Quelle 60 mit Druck versorgt, weshalb das Druckniveau stromabwärts des Relaisventils 52 von dem Magnetventil 12 steuerbar ist. Stromabwärts des Relaisventils 52 ist ein Federspeicherbremszylinder 58 angeordnet, der beispielsweise einer Feststellbremse eines Fahrzeugs zugeordnet sein kann. Der an dem Federspeicherbremszylinder 58 anliegende Druck kann von einem Drucksensor 36 erfasst werden, der mit dem hier nicht dargestellten Steuergerät 18 gekoppelt ist. Auf diese Weise ist ein Versagen des Magnetventils 12 detektierbar, da dann keine Veränderung des von dem Drucksensor 36 detektierten Druckniveaus stattfindet. Der Drucksensor 36 kann dabei auch vorteilhafterweise zwischen dem Magnetventil 12 und dem Steuereingang 54 angeordnet sein. Das überwachte Magnetventil 12 kann für seinen Betrieb weitere Spulen und Permanentmagnete umfassen. Darüber hinaus kann das Magnetventil 12 wahlweise monostabil oder bistabil ausgelegt sein. Weiterhin sind auch die Anzahl der Anschlüsse und die Anzahl möglicher Schaltzustände des Magnetventils 12 variierbar. Eine zusätzliche oder alternative Überwachung der übrigen dargestellten Magnetventile 50, 52 ist problemlos realisierbar.

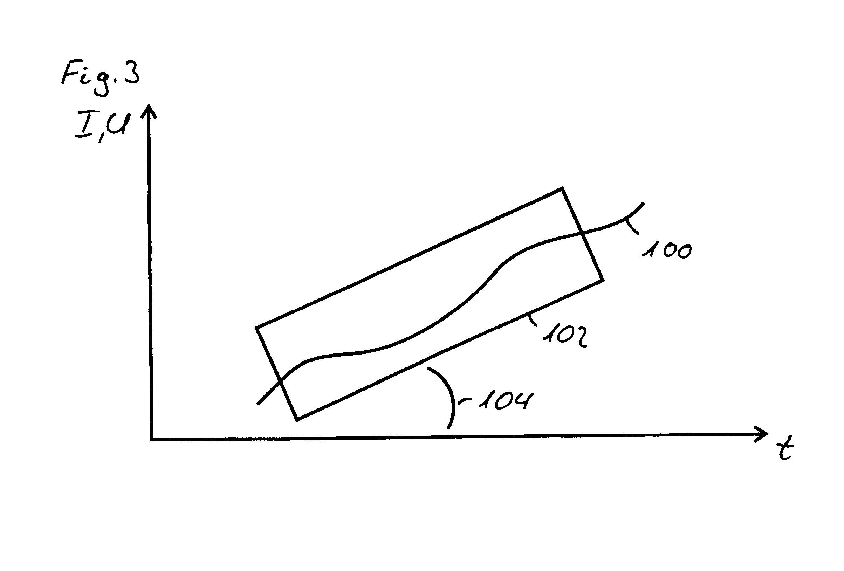

Figur 3 zeigt eine Referenzkurve mit einem Toleranzfeld und einem Winkel. Aufgetragen ist auf der x-Achse die Zeit und auf der y-Achse die Spannung U beziehungsweise der Strom I der zwischen den beiden Schaltknoten A und B fließt beziehungsweise abfällt. Eine dargestellte Referenzkurve 100 ergibt also den zeitlichen Strom- beziehungsweise Spannungsverlauf an der Spule 14, die mit der von dem Sensor 20 gemessenen Kurve verglichen wird, wobei die dargestellte Kurve einen beliebigen Verlauf hat und nur der Veranschaulichung des Zusammenspiels von Referenzkurve 100, einem Toleranzfeld 102 und einem Winkel 104 dient. Das Toleranzfeld 102 markiert zusammen mit dem Winkel 104 einen zulässigen Bereich gemessener Werte, wobei dieser zulässige Bereich in dem Schreib-Lesespeicher 38 hinterlegt ist, und erlernt oder vorbestimmt werden kann. Beim Einschalten einer Spule steigt der Strom kurzzeitig stark an, was einen Spannungsabfall im System zur Folge hat. Beim Abschalten einer Spule gibt diese kurzzeitig einen Spannungsimpuls ab, da der Strom nicht schnell genug folgen kann. Durch eine einfache Diodenschaltung kann dies begrenzt werden, wobei diese Diodenschaltung der Einfachheit halber nicht dargestellt ist. Der an dem Sensor 20 gemessene Spannungsabfall ist daher während des Ein- und Ausschaltens des Magnetventils 12 nicht konstant.

Die dargestellte Referenzkurve 100 kann entweder werksseitig in dem Schreib-Lesespeicher 38 des Steuergeräts 18 gespeichert sein oder bei der ersten Inbetriebnahme des Magnetventils 12 ermittelt werden. Es ist auch denkbar, die Referenzkurve 100 häufiger neu zu ermitteln, wobei in diesem Fall eventuell ein Defekt übersehen werden könnte, da bei der Erzeugung der Referenzkurve 100 nicht garantiert werden kann, dass das Magnetventil 12 noch unbeschädigt ist. Der Winkel 104 ergibt sich aus der mittleren Steigung der Referenzkurve 100. Das Toleranzfeld 102 muss in Abhängigkeit von der Temperatur des Magnetventils und der Versorgungsspannung gewählt werden, bei der die Referenzkurve 100 erzeugt wurde und auch die aktuellen Spannungs- und Temperaturbedingungen berücksichtigen. Liegt der gemessene Strom- beziehungsweise Spannungsverlauf außerhalb des Toleranzfeldes 102, so kann das Steuergerät 18 von einem Defekt des Magnetventils 12 ausgehen, eine Fehlermeldung ausgeben, speichern und einen Notlaufbetrieb initiieren. Die Ausgabe der Fehlermeldung kann beispielsweise im Führerhaus geschehen, wobei zu diesem Zweck eine entsprechende Fehlerbotschaft über den Anschluss 32 gesendet werden könnte. Die Einleitung eines Notlaufbetriebs kann ebenfalls durch Senden einer Fehlerbotschaft über den Anschluss 32 an ein nicht dargestelltes weiteres Steuergerät eingeleitet werden.

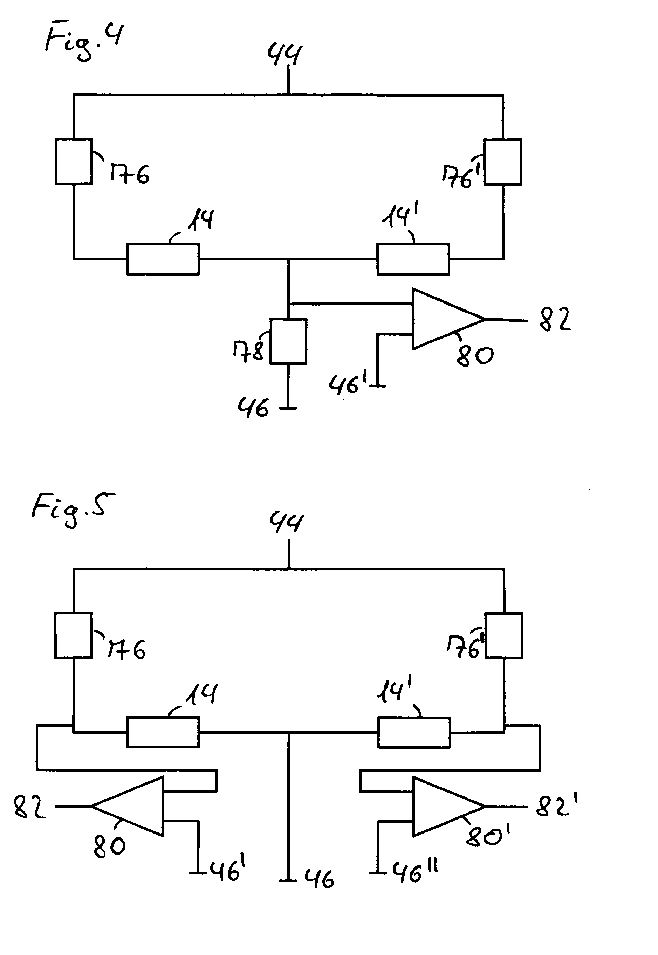

Figur 4 zeigt eine einfache Schaltanordnung zur Erfassung einer zeitlichen Stromänderung an Spulen eines Magnetventils. Die dargestellte Schaltung wird über eine Spannungsversorgung 44 mit Energie versorgt. Parallel zueinander zwischen der Spannungsversorgung 44 und einer Erde 46 sind eine Spule 14 und eine weitere Spule 14' angeordnet, zu denen jeweils ein Schalter 76 beziehungsweise ein weiterer Schalter 76' in Serie geschaltet sind. Weiterhin sieht die Schaltung vor, über einen Shunt 78 in Verbindung mit einem an einer Erde 46' geerdeten Operationsverstärker 80 einen Strom- beziehungsweise Spannungsverlauf zu messen, der an einem Ausgang 82 abgreifbar ist.

Im Folgenden wird die Funktionsweise der Schaltung kurz erläutert, wobei davon ausgegangen wird, dass der Schalter 76 beziehungsweise der weitere Schalter 76' zunächst geöffnet sind und keine Spannung an der Spule 14 beziehungsweise der weiteren Spule 14' anliegt. Wird beispielsweise der Schalter 76 geschlossen, so fließt ein Strom über die Spule 14 und den Shunt 78 aufgrund der Potenzialdifferenz zwischen der Spannungsversorgung 44 und der Erde 46. Der Operationsverstärker 80 ist geeignet, eine an dem Shunt 78 anliegende Spannung über den Ausgang 82 auszugeben. Der Verlauf der zeitlich detektierten Spannung ist wiederum geeignet, den zeitlichen Stromfluss in dem geschlossenen Stromkreis zu bestimmen, wodurch gleichzeitig der Stromfluss in der Spule 14 bei bekanntem Widerstand bestimmt ist. Die Entwicklung des zeitlichen Strom- beziehungsweise Spannungsverlaufs ist charakteristisch für den jeweiligen Schaltvorgang des Magnetventils und kann daher verwendet werden, um einen Defekt der Spule 14 beziehungsweise des zugehörigen Permanentmagneten zu detektieren. Die Funktionsweise bei einem Schließen des weiteren Schalters 76' zum Schalten der weiteren Spule 14' ist analog.

Figur 5 zeigt eine weitere einfache Schaltanordnung zur Erfassung einer zeitlichen Stromänderung an Spulen eines Magnetventils. Die in Figur 5 dargestellte Schaltung ist weitgehend mit der Figur 4 dargestellten Schaltung identisch. Jedoch ist neben dem Operationsverstärker 80 der nunmehr den inneren Widerstand der Spule 14 selbst als Shunt verwendet, ein an einer Erde 46" geerdeter weiterer Operationsverstärker 80' mit einem weiteren Ausgang 82' vorgesehen, der den inneren Widerstand der weiteren Spule 14' als Shunt verwendet.

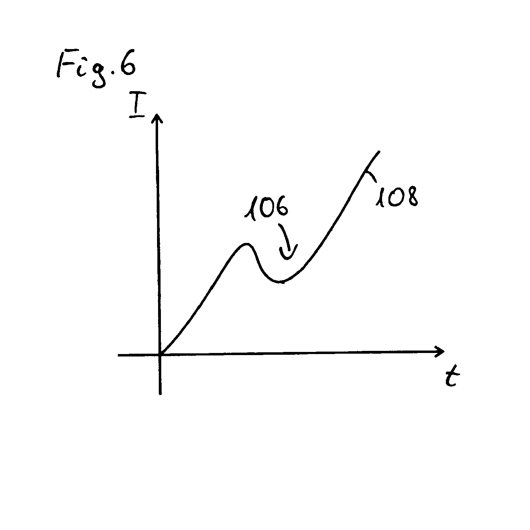

Figur 6 zeigt einen exemplarischen zeitlichen Stromverlauf während eines Schaltvorganges einer Spule eines Magnetventils. Die dargestellte Stromkurve 108 beginnt zu einem Zeitpunkt t gleich Null, bei dem ein der überwachten Spule zugeordneter Schalter geschlossen wird. Mit dem Schließen des der Spule zugeordneten Schalters beginnt ein Strom zu fließen, wobei die Stromstärke zunächst von Null ausgehend stark anwächst. Das Anwachsen der Stromstärke wird während des Schaltvorganges von einem Dip 106 unterbrochen, bevor ein weiteres Ansteigen der Stromkurve 108 erfolgt. Während des Dips 106 erfolgt der eigentliche Schaltvorgang des Magnetventils und ein der geschalteten Spule zugeordneter Permanentmagnet bewegt sich in dem durch die Spule induzierten Magnetfeld. Dies führt zu einer entsprechenden Gegeninduktion, die sich in der Stromkurve 108 in Form des Dips 106 bemerkbar macht. Eine Veränderung der Stromkurve 108, insbesondere des Dips 106, bei ansonsten gleichen Ausgangsbedingungen ist daher ein Kriterium für einen Defekt des Magnetventils.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Vorrichtung
- 12: Magnetventil
- 14: Spule
- 14': weitere Spule
- 16: Permanentmagnet
- 18: Steuergerät
- 20: Sensor
- 22: elektronisches Bauteil
- 24: elektronisches Bauteil
- 26: elektronisches Bauteil
- 28: elektronisches Bauteil
- 30: Temperatursensor
- 32: Anschluss
- 34: Zeitschaltglied
- 36: Drucksensor
- 38: Schreib-Lesespeicher
- 40: Handsteuergerät
- 42: Netzteil
- 44: Spannungsversorgung
- 46: Erde
- 46': Erde
- 46": Erde
- 48: Signalleitung
- 48': Signalleitung
- 48": Signalleitung
- 48''': Signalleitung
- 50: 2/2-Wegeventil
- 52: Relaisventil
- 54: Steuereingang
- 56: Entlüftung
- 58: Federspeicherbremszylinder
- 60: Druckversorgung
- 62: Prozessor
- 64: Leitung
- 66: Leitung
- 68: Leitung
- 70: Leitung
- 72: elektrische Feststellbremse
- 74: Nutzfahrzeug
- 76: Schalter
- 76': weiterer Schalter
- 78: Shunt
- 80: Operationsverstärker
- 80': weiterer Operationsverstärker
- 82: Ausgang
- 82': weiterer Ausgang
- A: Schaltknoten
- B: Schaltknoten
- 100: Referenzkurve
- 102: Toleranzfeld
- 104: Winkel
- 106: Dip
- 108: Stromkurve

## Patentansprüche

1. Vorrichtung (10), die ein Magnetventil (12) einer elektrischen Feststellbremse (72) eines Nutzfahrzeugs (74) mit mindestens einer Spule (14) und mindestens einem Permanentmagneten (16) betreibt und überwacht, wobei die Vorrichtung (10) ein Steuergerät (18) und elektronische Bauteile (22, 24, 26, 28) umfasst, **dadurch gekennzeichnet,**
- **dass** das Steuergerät (18) einen Strom- oder Spannungsverlauf an der mindestens einen Spule (14) direkt oder indirekt erfasst,
- **dass** ein Temperatursensor (30) vorgesehen ist, der die Temperatur des Magnetventils (12) erfasst, wobei die erfasste Temperatur über eine Leitung (66) an das Steuergerät (18) übertragen wird, und
- **dass** das Steuergerät (18) aus dem Strom- oder Spannungsverlauf in Abhängigkeit von der erfassten Temperatur das Schalten oder Nichtschalten des Magnetventils detektiert.

2. Vorrichtung (10) nach Anspruch 1, **dadurch gekennzeichnet, dass** die elektrische Feststellbremse (72) eine elektropneumatische Feststellbremse ist.

3. Vorrichtung (10) nach Anspruch 1 oder 2, **dadurch gekennzeichnet, dass** das Steuergerät (18) geeignet ist, eine Versorgungsspannung (44) des Magnetventils (12) über mindestens einen Strom- oder Spannungssensor (20) zu erfassen.

4. Vorrichtung (10) nach Anspruch 3, **dadurch gekennzeichnet, dass** der mindestens eine Strom- oder Spannungssensor (20) über eine Leitung (70) mit dem Steuergerät (18) verbunden ist.

5. Vorrichtung (10) nach einem der vorhergehenden Ansprüche, **dadurch gekennzeichnet, dass** das Steuergerät (18) zumindest Teilweise in ein anderes Steuergerät integriert ist.

6. Vorrichtung (10) nach einem der vorhergehenden Ansprüche, **dadurch gekennzeichnet, dass** das Steuergerät (18) einen Anschluss (32) an den CAN-Bus aufweist.

7. Vorrichtung (10) nach einem der vorhergehenden Ansprüche, **dadurch gekennzeichnet, dass** das Steuergerät (18) ein Zeitschaltglied (34) umfasst.

8. Vorrichtung (10) nach Anspruch 6, **dadurch gekennzeichnet, dass** das Steuergerät (18) geeignet ist, ein Zeitsignal über den CAN-Bus zu empfangen.

9. Vorrichtung (10) nach einem der vorhergehenden Ansprüche, **dadurch gekennzeichnet, dass** die elektronischen Bauteile (22, 24, 26, 28) und die mindestens eine Spule (14) eine Brückenschaltung bilden.

10. Vorrichtung (10) nach einem der vorhergehenden Ansprüche, **dadurch gekennzeichnet, dass** ein Drucksensor (36) vorgesehen ist, der den Druck stromabwärts des Magnetventils (12) erfasst.

11. Vorrichtung (10) nach einem der vorhergehenden Ansprüche, **dadurch gekennzeichnet, dass** das Steuergerät (18) einen Schreib-Lesespeicher (38) umfasst.

12. Verfahren zum Betreiben und Überwachen eines Magnetventils (12) einer elektrischen Feststellbremse (72) eines Nutzfahrzeugs (74) mit mindestens einer Spule (14) und mindestens einem Permanentmagneten (16), wobei die Vorrichtung (10) ein Steuergerät (18) und elektronische Bauteile (22, 24, 26, 28) umfasst, **dadurch gekennzeichnet,**
- **dass** ein Strom- oder Spannungsverlauf an der mindestens einen Spule (14) direkt oder indirekt erfasst wird,
- **dass** eine Temperatur des Magnetventils (12) erfasst und an das Steuergerät (18) übermittelt wird, und
- **dass** aus dem Strom- oder Spannungsverlauf in Abhängigkeit von der erfassten Temperatur das Schalten oder Nichtschalten des Magnetventils detektiert wird.

13. Verfahren nach Anspruch 12, **dadurch gekennzeichnet, dass** eine Versorgungsspannung des Magnetventils (12) erfasst wird.

14. Verfahren nach einem der Ansprüche 12 und 13, **dadurch gekennzeichnet, dass** zyklisch Testimpulse zum Schalten des Magnetventils (12) gesendet werden, die so kurz sind, dass die Trägheit des Magnetventils (12) nicht überwunden werden kann.

15. Verfahren nach einem der Ansprüche 12 bis 14, **dadurch gekennzeichnet, dass** zyklische Testimpulse zum Schalten des Magnetventils (12) gesendet werden, die einen Strom bewirken, der geringer als ein Umschaltstrom des Magnetventils (12) ist.

16. Verfahren nach einem der Ansprüche 12 bis 15, **dadurch gekennzeichnet,**
- **dass** ein Druck stromabwärts des Magnetventils (12) erfasst wird und
- **dass** der ermittelte Druck im Rahmen eines Plausibilitätstests für die Funktionsfähigkeit des Magnetventils (12) herangezogen wird.

17. Verfahren nach Anspruch 16, **dadurch gekennzeichnet, dass** ein Warnsignal ausgegeben, gespeichert und ein Notlaufbetrieb eingeleitet wird, wenn der Plausibilitätstest nicht erfolgreich ist.

18. Verfahren nach einem der Ansprüche 12 bis 16, **dadurch gekennzeichnet, dass** eine Referenzkurve (100) für den Strom- oder den Spannungsverlauf ermittelt wird und in einem Schreib-Lesespeicher (38) gespeichert wird.

19. Verfahren nach einem der Ansprüche 12 bis 18, **dadurch gekennzeichnet, dass** der ermittelte Strom- oder Spannungsverlauf mit einer in dem Schreib-Lesespeicher (38) gespeicherten Referenzkurve (100) verglichen wird.

20. Verfahren nach Anspruch 19, **dadurch gekennzeichnet, dass** bei dem Vergleich zwischen der gespeicherten Referenzkurve (100) und dem gemessenen Strom- oder Spannungsverlauf ein Toleranzfeld (102) und ein Winkel (104) berücksichtigt werden.

21. Verfahren nach einem der Ansprüche 18 bis 20, **dadurch gekennzeichnet, dass** eine Fehlermeldung ausgegeben, gespeichert und ein Notlaufbetrieb eingeleitet wird, wenn der gemessene Strom- oder Spannungsverlauf außerhalb des der Referenzkurve (100) zugehörigen Toleranzfeldes (102) liegt.

22. Verfahren nach Anspruch 18 oder 19, **dadurch gekennzeichnet, dass** eine Fehlermeldung ausgegeben, gespeichert und ein Notlaufbetrieb eingeleitet wird, wenn der gemessene Strom- oder Spannungsverlauf beim Schalten der Spule von der gespeicherten Referenzkurve (100) abdriftet.

## Claims

1. Device (10) for operating and monitoring a solenoid valve (12) of an electric parking brake (72) of a commercial vehicle (74), the solenoid valve (12) comprising at least one coil (14) and at least one permanent magnet (16), the device (10) comprising a control unit (18) and electronic components (22, 24, 26, 28), **characterised in that**
- the control unit (18) directly or indirectly detects a current or voltage behaviour at the at least one coil (14),
- a temperature sensor (30) is provided for detecting the temperature of the solenoid valve (12), the detected temperature being transmitted to the control unit (18) via a line (66), and
- the control unit (18) detects from the current or voltage behaviour the switching or non-switching of the solenoid valve as a function of the detected temperature.

2. Device (10) according to claim 1, **characterised in that** the electric parking brake (72) is an electropneumatic parking brake.

3. Device (10) according to claim 1 or 2, **characterised in that** the control unit (18) is suitable for detecting a supply voltage (44) of the solenoid valve (12) via at least one current or voltage sensor (20).

4. Device (10) according to claim 3, **characterised in that** the at least one current or voltage sensor (20) is connected to the control unit (18) via a line (70).

5. Device (10) according to any of the preceding claims, **characterised in that** the control unit (18) is at least partially integrated into another control unit.

6. Device (10) according to any of the preceding claims, **characterised in that** the control unit (18) has a connection (32) to the CAN bus.

7. Device (10) according to any of the preceding claims, **characterised in that** the control unit (18) comprises a timing element 34).

8. Device (10) according to claim 7, **characterised in that** the control unit (18) is suitable for receiving a timing signal via the CAN bus.

9. Device (10) according to any of the preceding claims, **characterised in that** the electronic components (22, 24, 26, 28) and the at least one coil (14) form a bridge circuit.

10. Device (10) according to any of the preceding claims, **characterised in that** a pressure sensor (36) which detects the pressure downstream of the solenoid valve (12) is provided.

11. Device (10) according to any of the preceding claims, **characterised in that** the control unit (18) comprises a write-read memory (38).

12. Method for operating and monitoring a solenoid valve (12) of an electric parking brake (72) of a commercial vehicle (74), the solenoid valve (12) comprising at least one coil (14) and at least one permanent magnet (16), the device (10) comprising a control unit (18) and electronic components (22, 24, 26, 28), **characterised in that**
- a current or voltage behaviour is directly or indirectly detected at the at least one coil (14),
- a temperature of the solenoid valve (12) is detected and transmitted to the control unit (18), and
- the switching or non-switching of the solenoid valve is detected from the current or voltage behaviour as a function of the detected temperature.

13. Method according to claim 12, **characterised in that** a supply voltage of the solenoid valve (12) is detected.

14. Method according to claim 12 or 13, **characterised in that** cyclic test pulses are transmitted for switching the solenoid valve (12), which test pulses are so short that the inertia of the solenoid valve (12) cannot be overcome.

15. Method according to any of claims 12 to 14, **characterised in that** cyclic test pulses are transmitted for switching the solenoid valve (12), which test pulses generate a current which is less than a switch-over current of the solenoid valve (12).

16. Method according to any of claims 12 to 15, **characterised in that**
- a pressure is detected downstream of the solenoid valve (12), and
- the detected pressure is used for checking the functionality of the solenoid valve (12) within a plausibility check.

17. Method according to claim 16, **characterised in that** a warning signal is output and stored and a limp-home is initiated if the plausibility check is not successful.

18. Method according to any of claims 12 to 16, **characterised in that** a reference curve (100) for the current or voltage behaviour is determined and stored in the write-read memory (38).

19. Method according to any of claims 12 to 18, **characterised in that** the detected current or voltage behaviour is compared to the reference curve (100) stored in the write-read memory (38).

20. Method according to claim 19, **characterised in that** in the comparison between the stored reference curve (100) and the measured current or voltage behaviour a tolerance zone (102) and an angle (104) are taken into account.

21. Method according to any of claims 18 to 20, **characterised in that** an error message is output and stored and a limp-home is initiated if the measured current or voltage behaviour lies outside the tolerance zone (102) assigned to the reference curve (100).

22. Method according to claim 16 or 19, **characterised in that** an error message is output and stored and a limp-home is initiated if the measured current or voltage behaviour drifts away from the stored reference curve (100) if the coil switches.

## Revendications

1. Dispositif (10), qui fait fonctionner et contrôle une électrovanne (12) d'un frein (72) de stationnement électriquement d'un véhicule (74) utilitaire, ayant au moins une bobine (14) et au moins un aimant (16) permanent, le dispositif (10) comprenant un appareil (18) de commande et des composants (22, 24, 26, 28) électroniques, **caractérisé**
- **en ce que** l'appareil (18) de commande détecte directement ou indirectement une courbe de courant ou de tension sur la au moins une bobine (14),
- **en ce qu'**il est prévu un capteur (30) de température, qui détecte la température de l'électrovanne (12), la température détectée étant transmise à l'appareil (18) de commande par une ligne (66) et
- **en ce que** l'appareil (18) de commande détecte, à partir de la courbe de courant ou de tension, en fonction de la température détectée, la connexion ou la déconnexion de l'électrovanne.

2. Dispositif (10) suivant la revendication 1, **caractérisé en ce que** le frein (72) de stationnement électrique est un frein de stationnement électropneumatique.

3. Dispositif (10) suivant la revendication 1 ou 2, **caractérisé en ce que** l'appareil (18) de commande est propre à détecter une tension (44) d'alimentation de l'électrovanne (12) par au moins un capteur (20) de courant ou de tension.

4. Dispositif (10) suivant la revendication 3, **caractérisé en ce que** le au moins un capteur (20) de courant ou de tension est relié à l'appareil (18) de commande par une ligne (70).

5. Dispositif (10) suivant l'une des revendications précédentes, **caractérisé en ce que** l'appareil (18) de commande est intégré au moins en partie dans un autre appareil de commande.

6. Dispositif (10) suivant l'une des revendications précédentes, **caractérisé en ce que** l'appareil (18) de commande a une borne (32) sur le bus CAN.

7. Dispositif (10) suivant l'une des revendications précédentes, **caractérisé en ce que** l'appareil (18) de commande comprend un élément (34) d'interruption à minuterie.

8. Dispositif (10) suivant la revendication 6, **caractérisé en ce que** l'appareil (18) de commande est propre à recevoir un signal de temps par le bus CAN.

9. Dispositif (10) suivant l'une des revendications précédentes, **caractérisé en ce que** les composants (22, 24, 26, 28) électroniques et la au moins une bobine (14) forment un circuit en pont.

10. Dispositif (10) suivant l'une des revendications précédentes, **caractérisé en ce qu'**il est prévu un capteur (36) de pression, qui détecte la pression en aval de l'électrovanne (12).

11. Dispositif (10) suivant l'une des revendications précédentes, **caractérisé en ce que** l'appareil (18) de commande comprend une mémoire (38) d'écriture-lecture.

12. Procédé pour faire fonctionner et pour contrôler une électrovanne (12) d'un frein (72) de stationnement électrique) d'un véhicule (74) utilitaire, ayant au moins une bobine (14) et au moins un aimant (16) permanent, le dispositif (10) comprenant un appareil (18) de commande et des composants (22, 24, 26, 28) électroniques, **caractérisé**
- **en ce que** l'on détecte directement ou indirectement une courbe de courant ou de tension sur la au moins une bobine (14),
- **en ce que** l'on détecte une température de l'électrovanne (12) et on la transmet à l'appareil (18) de commande et
- **en ce que** l'on détecte, à partir de la courbe de courant ou de tension en fonction de la température détectée, la connexion ou la déconnexion de l'électrovanne.

13. Procédé suivant la revendication 12, **caractérisé en ce que** l'on détecte une tension d'alimentation de l'électrovanne (12).

14. Procédé suivant l'une des revendications 12 et 13, **caractérisé en ce que** l'on envoie, pour la commutation de l'électrovanne (12), cycliquement des impulsions de test, qui sont si courtes, que l'inertie de l'électrovanne (12) ne peut pas être surmontée.

15. Procédé suivant l'une des revendications 12 à 14, **caractérisé en ce que** l'on envoie, pour la connexion de l'électrovanne (12), cycliquement des impulsions de test, qui provoquent un courant, moins intense qu'un courant de commutation de l'électrovanne (12).

16. Procédé suivant l'une des revendications 12 à 15, **caractérisé en ce que**
- **en ce que** l'on détecte une pression en aval de l'électrovanne (12) et
- **en ce que** l'on tire parti de la pression détectée dans le cadre d'un test de vraisemblance pour l'aptitude à fonctionner de l'électrovanne (12).

17. Procédé suivant la revendication 16, **caractérisé en ce que** l'on émet un signal d'alerte, on le mémorise et on fait débuter un fonctionnement en cas d'urgence, si le test de vraisemblance n'est pas couronné de succès.

18. Procédé suivant l'une des revendications 12 à 16, **caractérisé en ce que** l'on détermine une courbe (100) de référence pour la courbe de courant ou pour la courbe de tension et on la mémorise dans une mémoire (38) d'écriture-lecture.

19. Procédé suivant l'une des revendications 12 à 18, **caractérisé en ce que** l'on compare la courbe de courant ou de tension déterminée à une courbe (100) de référence mémorisée dans la mémoire (38) d'écriture-lecture.

20. Procédé suivant la revendication 19, **caractérisé en ce que**, lors de la comparaison entre la courbe (100) de référence mémorisée et la courbe de courant ou de tension mesurée, on tient compte d'un champ (102) de tolérance et d'un angle (104).

21. Procédé suivant l'une des revendications 18 à 20, **caractérisé en ce que** l'on émet un message d'erreur, on le mémorise et on fait débuter un fonctionnement en cas d'urgence, si la courbe de courant ou de tension mesurée est en dehors du champ (102) de tolérance associée à la courbe (100) de référence.

22. Procédé suivant la revendication 18 ou 19, **caractérisé en ce que** l'on émet un message d'erreur, on le mémorise et on fait débuter un fonctionnement en cas d'urgence, si la courbe de courant ou de tension mesurée dérive, lors de la connexion de la bobine, de la courbe (100) de référence mémorisée.
